# EUROPÄISCHE PATENTSCHRIFT

(11) **EP 1 025 017 B1**
(45) Veröffentlichungstag und Bekanntmachung des Hinweises auf die Patenterteilung: **03.04.2002**
(21) Anmeldenummer: 97947818.7
(22) Anmeldetag: 05.12.1997
(51) Int. Cl.: B65D 65/46, A23P 1/08

(54) **UMWELTFREUNDLICHES PACKMATERIAL UND VERFAHREN ZU SEINER HERSTELLUNG**
ENVIRONMENTALLY FRIENDLY PACKAGING MATERIAL AND PROCESS FOR PRODUCING THE SAME
MATERIAU D'EMBALLAGE COMPATIBLE AVEC L'ENVIRONNEMENT ET SON PROCEDE DE FABRICATION

(30) Priorität: 13.02.1997 HU 9700431
(43) Veröffentlichungstag der Anmeldung: 09.08.2000
(73) Patentinhaber: Borbély, Jozsef, 6791 Szeged (HU); Berta, Jozsef, 6791 Szeged (HU); Lippai, Lajos, 3574 Bocs (HU)
(72) Erfinder: Borbély, Jozsef, 6791 Szeged (HU); Berta, Jozsef, 6791 Szeged (HU); Lippai, Lajos, 3574 Bocs (HU)
(74) Vertreter: Goddar, Heinz J., Dr.
(86) Internationale Anmeldenummer: HU9700081
(87) Internationale Veröffentlichungsnummer: WO9835885

(56) Entgegenhaltungen:
- EP-A- 0 474 095
- EP-A- 0 741 006
- WO-A-97/00015
- DE-A- 4 025 524

## Beschreibung

Gegenstand der Erfindung ist ein umweltfreundliches Packmaterial vor allem für die Lagerung von ölhaltigen Lebensmitteln, welches einen aus Mehl, Wasser und Zugaben gebackenen Behälter, ferner die den Behälter überziehende äußere Schicht und innere Schicht besitzt. Gegenstand der Erfindung ist auch das Verfahren zur Herstellung von diesem Packmaterial, (siehe als Beispiel des Dokument DE-A-40 25 524).

Verschiedene Erzeugnisse und Lebensmittel werden mit Verpackung versehen. Die aus Naturstoffen hergestellte Packmaterialien sind infolge ihrer physikalischen Eigenschaften nicht für das Verpacken von gewissen Gütern, z.B. von ölhaltigen Produkten geeignet. Die Mehrzahl der aus Plastik hergestellten Packmaterialien schädigen die Umwelt. In Westeuropa entfallen jährlich etwa 4 t Abfälle pro Kopf, deren beträchtlicher Teil Packmaterialien sind. Es gibt zwar schnell zerfallende Kunststoffe, in der Patentschrift EP-A-0 741 006 wird so ein Kunststoff bekannt gemacht, die sind aber sehr teuer. Besonders in der Lebensmittelindustrie sind Packmaterialien bekannt, die aus natürlichen Grundstoffen hergestellt sind und schnell zerfallen. Die Mehrzahl dieser Packmaterialien ist mittels backgewerblicher Technologie hergestellt. Allgemein bekannt ist der kegelförmige Waffel-Behälter für Eis, der für eine kurzzeitige Aufnahme des Eises geeignet ist und nach dem Gebrauch in der Regel verzehrt wird. So einen stellt das Gebrauchsmuster DE-U-9 011 987 dar.

Die Patentschrift EP-A-0 293 552 beschreibt ein für menschlichen Verbrauch geeignetes hohles Gebäck. Das Gebäck kann entweder leer oder mit Füllung verbraucht werden. Die Offenlegungsschrift DE-A-2 929 496 berichtet über eine gitterförmige, aus Sojamehl hergestellte süße Waffel. Der Nachteil dieser Lösungen besteht darin, daß sie vor allem Lebensmittel sind und sich zum Verpacken praktisch nicht eignen.

DE-A-3 330 567 gibt ein Verfahren zum Imprägnieren einer Brotschicht mit Sojaöl bekannt. Nachteil des Verfahrens ist, daß das Produkt zum Verpacken ungeeignet ist.

WO-A-91/12186 beschreibt einen verrotbaren, dünnwandigen Formkörper auf Stärkebasis für das Backgewerbe. Sein Nachteil ist, daß die Verpackung nicht formbeständig und zum dauernden Verpacken ungeeignet ist. WO-A-96/03886 beschreibt ein durch Backen hergestelltes, auch für die Aufnahme von Flüssigkeiten geeignetes Packmaterial. Das Produkt wird von innen mit Wachs imprägniert. Ein Nachteil dieser Lösung ist, daß Wachs sich in Öl auflöst und seine Viskosität bei hoher Temperatur sinkt. Da ein bedeutender Teil der ölhaltigen Lebensmittelprodukte in warmen Zustand verpackt wird, ist das Produkt für das Verpacken dieser Lebensmittel nicht geeignet. EP-A-0 471 306 teilt die Beschreibung eines Packmaterials auf Basis von Polysaccharid für das Backgewerbe mit. Das Kautschuk wird in Form von Latexmilch verwendet, die in den Teig eingearbeitet oder innerlich aufgetragen wird. Nachteil des Verfahrens ist, daß das Kautschuk teuer ist und das die Feuchtigkeit es anschwillt und durchdringt. Gase dringen auch durch dieses Packmaterial durch, daher ist es für dauernde Verpackung nicht geeignet.

EP-A-0 672 349 beschreibt ein aus Teig hergestelltes, unter Kühlung gepreßtes Packmaterial. EP-A-0 512 589 stellt ein gebackenes Packmaterial auf Kartoffelbasis vor. Offenlegungsschrift DE 4 009 408 gibt ein Packmaterial für das Backgewerbe auf Zellulosen- und Eiweißbasis bekannt. Offenlegungsschrift DE 4 221 018 beschreibt das Fertigungsverfahren einer aus Teig gebackenen Schale unter Verwendung von Lauge Patentschrift DE-A-4 239 143 beschreibt das Fertigungsverfahren einer für den menschlichen Verbrauch geeigneten Schale, welche in zwei Stufen aus gebackenem Teig hergestellt wird und ihre endgültige Form in gekühltem Zustand erhält. WO-A-97/00015 stellt ein dünnwandiges, zerfallendes, aus Teig gebackenes Packmaterial vor. Der Teig wird vor dem Backen mit Polyvinilalkohol und Zirkoniumsalz behandelt. Nachteil dieser Lösungen ist, daß sie für die dauernde Verpackung von ölhaltigen Produkten nicht geeignet sind.

EP-A-0 265 745 beschreibt eine auch für menschlichen Konsum geeignete Teigwaren-Schachtel. Die Schachtel kann mit einer geformten Oblate ausgekleidet werden, zwischen der Oblate und der Schachtel wird eine Fett- oder Gelatineschicht aufgetragen. Nachteil der Schachtel ist, daß sie für das Dauer-Verpacken von ölhaltigen und nassen Produkten nicht geeignet ist. Die Wanddicke der aus mehreren Schichten bestehenden Schachtel ist ziemlich groß, was wie vom ästhetischen so auch vom Kosten-Standpunkt ungünstig ist.

Die Patentschriften HU-209 2339 und WO-A-95/34482 stellen ein umweltfreundliches, fett- und ölbestandiges, durch Backen hergestelltes Packmaterial vor. Nachteil der Lösung ist, daß das Produkt praktisch zerbrechlich ist und beim Verpacken von nassen Lebensmitteln schnell durchnäßt wird.

Ein gemeinsamer Nachteil der obigen, dem Stand der Technik entsprechenden Lösungen ist, daß die eventuelle Schutzauskleidung nur an der inneren Seite des Packmaterials angeordnet ist, so daß das aus Teig hergestellte Packmaterial von außen gegen Feuchtigkeit und mechanische Einwirkungen nicht geschützt ist. Infolgedessen verschmutzen diese Verpackungen entweder mit ihren Krümeln das Innere des Beutels oder sie benötigen noch eine zusätzliche Umhüllung, z.B. einen Papierbeutel.

Ziel der Erfindung ist die Beseitigung der Nachteile der bisherigen Lösungen und die Entwicklung so eines umweltfreundlichen, aus Teig durch Backen hergestellten Packmaterials, welches billig, für die Lagerung von heißen ölhaltigen, feuchten Erzeugnissen auch geeignet ist und nach dem Gebrauch zerfallt. Es ist auch Ziel, daß die Zerfallzeit geregelt werden könne.

Grundlage der erfindungsmässigen Idee ist die Erkenntnis, daß wenn die aus Teig hergestellte Verpackungsform mit einer, eine regulierbare Zerfallzeit besitzenden, stärkehaltigen Folie oder Film überzogen wird, können wir eine günstigere Lösung, als die bisher bekannten, erhalten.

Entsprechend dem gesetzten Ziel beruht das erfindungsmässige umweltfreundliche Packmaterial vor allem für die Lagerung von ölhaltigen Lebensmitteln, welches einen aus Mehl, Wasser und Zugaben gebackenen Behälter, ferner die den Behälter überziehende äußere Schicht und innere Schicht besitzt, so gestaltet, daß die äußere Schicht (2, 5) und die innere Schicht (3, 6) eine Kunststoff und wenigstens 40 % Stärke enthaltende Folie oder Film mit regulierbarer Zerfallzeit ist.

Eine weitere Eigentümlichkeit des erfindungsmässigen Packmaterials kann darin bestehen, daß zwischen die äußere Schicht und den Behälter ein für die Darstellung von Information geeignetes Feld eingesetzt ist. Bei einer Ausführungsformen sind die äußere Schicht und die innere Schicht entlang des Randes des Behälters miteinander verbunden.

Entsprechend dem gesetzten Ziel beruht das erfindungsmässige Verfahren zur Herstellung von umweltfreundlichen Packmaterial, vor allem für die Lagerung von ölhaltigen Lebensmitteln, im Laufe dessen aus Mehl, Wasser und Zugaben ein Teig gemacht wird, aus dem Teig zweckmässigerweise in einem Backeisen bei einer Temperatur über 150 °C und einem Druck über 5 bar ein Behälter gebacken wird und der Behälter von innen und außen überzogen wird, darauf, daß im Laufe der Bekleidung des Behälters an dessen äussere und innere Oberfläche eine Zellulose, Kunststoff und wenigstens 40 % Stärke enthaltende Folie oder ein Film mit regulierbarer Zerfallzeit angebracht wird.

Es kann eine Eigentümlichkeit des Verfahrens sein, daß die Folie am Behälter durch Vakuumformen angeordnet und durch Pressen befestigt wird. Es kann auch charakteristisch sein, daß der Film an den Behälter durch Pulververstaubung in elektrostatischem Raum aufgetragen, danach durch Wärmebehandlung befestigt wird.

Das erfindungsmässige Packmaterial hat zahlreiche Vorteile. Es kann auch zum Verpacken von heißen ölhaltigen, fetten oder nassen Lebensmitteln angewendet werden. Es zerstäubt nicht, ist auch von außen öl- und wasserbeständig. Seine Struktur ist formbeständig und fest, deswegen können die verpackten Erzeugnisse auch in senkrechter Richtung eingeordnet gelagert werden. Vorteilhaft ist auch der Umstand, daß die Zerfallzeit des Packmaterials im Laufe der Fertigung den Anforderungen entsprechend eingestellt werden kann. Das Produktionsverfahren ist einfach und billig.

Im weiteren stellen wir die Erfindung an Ausführung- und Verfahren-Beispielen näher vor. Die beigelegten Zeichnungen sind:
Abb. 1 Halbquerschnitt in Halbansicht der mit Folie überzogenen Platte,
Abb. 2 Obenansicht der Platte,
Abb. 3 Querschnitt des mit Film überzogenen Behälters,
Abb. 4 Untenansicht des Behälters.

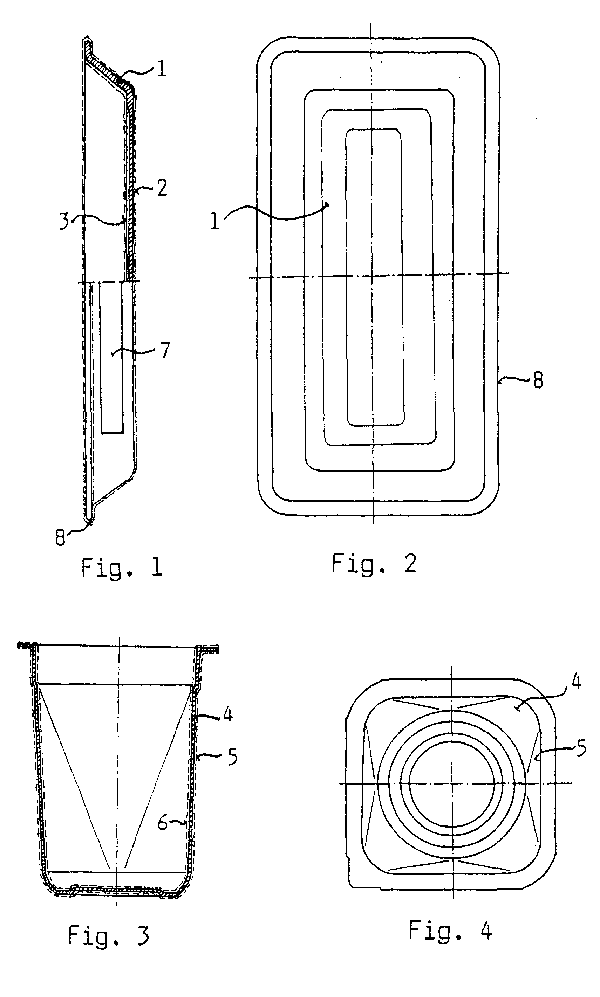

Auf Abb 1 ist der die Platte bildende Behälter 1 sichtbar, dessen äussere Schicht 2 und innere Schicht 3 der Film bildet. Die äussere Schicht 2 und die innere Schicht 3 sind entlang des Randes 8 miteinander verbunden. Zwischen dem Behälter 1 und der äusseren Schicht 2 ist das für die Darstellung von Information geeignete Feld 7 eingesetzt. Auf Abb. 2 ist der Behälter 1 und sein Rand 8 aus Obenansicht sichtbar.

Auf Abb. 3 ist der becherförmige Behälter 4 sichtbar. Der Behälter 4 ist mit der äusseren Schicht 5 und der inneren Schicht 6 als Film bekleidet. Auf Abb. 4. sind der Behälter 4 und die äussere Schicht 5 aus Untenansicht sichtbar.

Im Laufe des Fertigungsverfahrens wird zuerst der Behälter 1 bei einem Druck über 5 bar und einer Temperatur von 150 °C mit backgewerblicher Technologie hergestellt. Vorgeschlagene Zusammensetzung des Teiges: 60-80 Massen-% (im weiteren %) Mehl, 0,3-1,2 % Fett, maximum 1,5 % Maisstärke, 0,4-1,5 % Natrium-Hydrogen-Karbonat, 0,3-1,2 % Eidotter, 0,5-1,2 % Milchpulver. Die festen Komponenten werden mit 10 % Wasser auf 100 % ergänzt. Die Komponenten werden zusammengeknetet und entsprechend der gewünschten Form in einem zweiteiligen Backeisen bei einer Temperatur von 150-200 °C und einem Schließdruck des Backeisens von 5-7 bar gebacken. Behälter 1 kann natürlich auch mit einer anderen Zusammensetzung gefertigt werden, z.B. mit Weizengriess. Das Mehl kann auch aus jeder Getreide- oder Samenart gemacht werden. Behälter 1 kann auch farbig sein.

Der fertige Behälter 1 wird dann mit einer kunststoffhaltigen Schicht überzogen. Vor der Bekleidung ist es möglich den Behälter 1 mit einer Aufschrift zu versehen oder an ihm im Felde 7 eine Etikette anzubringen. Das Material der äusseren Schicht 2, 5 und der inneren Schicht 3, 6 hat eine regulierbare Zerfallzeit und enthält 40-85 % Stärke, 3-10 % Zellulose, 2-8 % Polyäthylen. Durch die Vergrößerung der Dicke der Folie, bzw. des Filmes und/oder durch die Verminderung des Stärkegehalts kann die Zerfallzeit verlängert werden. Das Auftragen der Bekleidung kann als Lösung, in Pulverform, in Form von Folie oder Platte erfolgen. Die Auftragung des Pulvers kann mittels Spritzpistole, aus wirbelndem Fluidbett oder durch Aufschmelzen erfolgen.

Im Laufe der Bekleidung haben wir zwei Technologien als optimal gefunden, das Anbringen der Folie mit Vakuumformen, bzw. das Anbringen des Filmes durch Pulverstauben und Wärmebehandlung. Unter Folie ist ein mit Kunstoff-Technologie, zweckmässigerweise mit Extruder oder Gießen und Walzen hergestelltes Produkt zu verstehen.

Während des Vakuumformens wird die zweckmässigerweise 40-60 µm dicke Folie von außen und innen auf den Behälter gelegt, die Luft zwischen dem Behälter 1 und der Folie abgesaugt und dann die Folie durch Pressen befestigt. Bei der Pulververstaubung wird auf den Behälter 1 in elektrostatischem Raum mittels Spritzpistole ein 20-40 µm starker Film aufgetragen, welcher im Ofen in der Regel bei 170-190 °C durch Wärmebehandlung befestigt wird.

### Beispiel 1

Aus 86 % Mehl, 0,8 % Schweinefett, 0,6 % Natrium-Hydrogen-Karbonat, 0,65 % Maisstärke, 0,8 % Milchpulver, 0,8 % Hühnereidotter und das alles auf 100 % mit Wasser ergänzt wird in bekannter Weise ein Teig gemacht. Der Teig wird in einem entsprechenden plattenförmigen zweiteiligen Backeisen bei einem Schliessdruck von 7 bar gebacken. Auf der Platte wird eine Aufschrift angeordnet. Auf die Platte wird außen und innen durch Vakuumformen eine 50 µm dicke, 50 % Stärke enthaltende Folie aufgetragen. Auf die Platte legt man ein heiße Öl-Wasser-Emulsion enthaltende Speise, welche später abgekühlt und einen Monat lang gelagert wird. Nach dem Gebrauch zerfällt die Platte im Boden in 4 Monaten.

### Beispiel 2

Aus 80 % Mehl, 0,5 % Fett, 0,6 % Natrium-Hydrogen-Karbonat, 0,8 % Eidotter, 0,9 % Milchpulver, 5 % gemahlenem Weizengriess und Wasser wird gemäß Beispiel 1 Teig gemacht. Der Teig wird in einer becherförmigen Form bei 5,5 bar Druck gebacken. Auf den Becher wird in elektrostatischem Raum durch Pulververstaubung ein 30 µm dicker Film aufgetragen, welcher im Ofen befestigt wird. Stärkegehalt des Filmes 80 %. Der Becher wird gemäß Beispiel 1 zum Verpacken verwendet. Nach dem Gebrauch zerfällt das Packmaterial im Boden in 4-6 Wochen.

Das erfindungsmässige Packmaterial wird in erster Reihe zum Verpacken von ölhaltigen Lebensmitteln verwendet, seine Zerfallzeit kann eingestellt werden.

## Patentansprüche

1. Umweltfreundliches Packmaterial vor allem für die Lagerung von ölhaltigen Lebensmitteln, welches einen aus Mehl, Wasser und Zugaben gebackenen Behälter, ferner die den Behälter überziehende äußere Schicht und innere Schicht besitzt, **dadurch gekennzeichnet, daß** die äußere Schicht (2, 5) und die innere Schicht (3, 6) eine Kunststoff und wenigstens 40 % Stärke enthaltende Folie oder Film mit regulierbarer Zerfallzeit ist.

2. Packmaterial nach Anspruch 1 **dadurch gekennzeichnet, daß** zwischen die äußere Schicht (2) und den Behälter (1) ein für die Darstellung von Information geeignetes Feld (7) eingesetzt ist.

3. Packmaterial nach Anspruch 1 oder 2 **dadurch gekennzeichnet, daß** die äußere Schicht (2) und die innere Schicht (3) entlang des Randes (8) des Behälters (1) miteinander verbunden sind.

4. Verfahren zur Herstellung von umweltfreundlichen Packmaterial, vor allem für die Lagerung von ölhaltigen Lebensmitteln, im Laufe dessen aus Mehl, Wasser und Zugaben ein Teig gemacht wird, aus dem Teig zweckmässigerweise in einem Backeisen bei einer Temperatur über 150 °C und einem Druck über 5 bar ein Behälter gebacken wird und der Behälter von innen und außen überzogen wird, **dadurch gekennzeichnet, daß** im Laufe der Bekleidung des Behälters (1) an dessen äussere und innere Oberfläche eine Zellulose, Kunststoff und wenigstens 40 % Stärke enthaltende Folie oder ein Film mit regulierbarer Zerfallzeit angebracht wird.

5. Verfahren nach Anspruch 4, **dadurch gekennzeichnet, daß** die Folie am Behälter (1) durch Vakuumformen angeordnet und durch Pressen befestigt wird.

6. Verfahren nach Anspruch 4, **dadurch gekennzeichnet, daß** der Film an den Behälter (1) durch Pulververstaubung in elektrostatischem Raum aufgetragen, danach durch Wärmebehandlung befestigt wird.

## Claims

1. An environmentally friendly packaging material, mainly for storing oily foodstuffs which comprises a baked container made of flour, water and other ingredients, an outer and inner layer coating the container, characterized thereby that the outer layer (2, 5) and the inner layer (3, 6) consist of a foil or a film containing a plastic material and at least 40 % starch having a controllable decomposition time.

2. Packaging material according to claim 1 characterized thereby that between the outer layer (2) and the container (1) a field (7) suitable for information is inserted.

3. Packaging material according to claim 1 or 2 characterized thereby that the outer layer (2) and the inner layer (3) are connected with each other along the brim (8) of the container (1).

4. Process for producing the environmentally friendly packaging material mainly for storing oily foodstuffs in the course of which a dough is made of flour, water and ingredients, from the dough advisably in a baking device at a temperature above 150 °C and a pressure above 5 bar a container is being baked, the container being coated on the inside and outside surfaces, **characterized by** that in the course of coating of the container (1) a foil or a film consisting of cellulose, plastic material and at least 40 % starch is applied having a controllable decomposition time.

5. Process according to claim 4 characterized thereby that the foil is applied on the container (1) by vacuum forming and fixed by pressing.

6. Process according to claim 4 characterized thereby that the film is applied on the container (1) by dusting in an electrostatic space and fixed by heat-treating.

## Revendications

1. Matériau d'emballage compatible avec l'environnement, principalement pour le stockage de produits alimentaires contenant de l'huile, possédant un réceptacle réalisé par cuisson à partir de farine, d'eau et de produits additifs, et possédant en outre une couche extérieure et une couche intérieure qui recouvrent le réceptacle, **caractérisé en ce que** la couche extérieure (2, 5) et la couche intérieure (3, 6) sont formées par une feuille ou un film contenant une matière plastique et au moins 40% d'amidon, avec durée de décomposition susceptible d'être réglée.

2. Matériau d'emballage selon la revendication 1, **caractérisé en ce qu'**un champ (7) convenable à la présentation d'informations est mis en place entre la couche extérieure (2) et le réceptacle (1).

3. Matériau d'emballage selon l'une ou l'autre des revendications 1 et 2, **caractérisé en ce que** la couche extérieure (2) et la couche intérieure (3) sont reliées l'une à l'autre le long de la bordure (8) du réceptacle (1).

4. Procédé pour la réalisation d'un matériau d'emballage compatible avec l'environnement, principalement pour le stockage de produits alimentaires contenant de l'huile, au cours duquel on réalise une pâte à partir de farine, d'eau et d'additifs, on réalise un réceptacle par cuisson dans un moule de cuisson, sous une température de 150°C et une pression supérieure à 5 bar, et l'on applique un revêtement sur le réceptacle depuis l'intérieur et l'extérieur, **caractérisé en ce que**, au cours du revêtement du réceptacle (1) sur sa surface intérieure et sur sa surface extérieure, on applique une feuille ou un film contenant de la cellulose, une matière plastique et au moins 40% d'amidon, avec durée de décomposition susceptible d'être réglée.

5. Procédé selon la revendication 4, **caractérisé en ce que** la feuille est agencée sur le réceptacle (1) par mise en forme sous vide, et fixée par pressage.

6. Procédé selon la revendication 4, **caractérisé en ce que** le film est appliqué sur le réceptacle (1) par pulvérisation de poudre dans une enceinte électrostatique, et fixé ensuite par traitement thermique.
